Europäisches Patentamt

(19) European Patent Office

Office européen des brevets

(11) Publication number: **0 227 212**
**B1**

# EUROPEAN PATENT SPECIFICATION

(45) Date of publication of the patent specification: 06.06.90

(51) Int. Cl.⁵: **F16K 1/14**

(21) Application number: **86306990.2**

(22) Date of filing: **10.09.86**

(54) Automatic overflow control apparatus for a pipeline.

(30) Priority: **11.09.85 US 775025**

(43) Date of publication of application:
**01.07.87 Bulletin 87/27**

(45) Publication of the grant of the patent:
**06.06.90 Bulletin 90/23**

(84) Designated Contracting States:
**AT BE CH DE FR GB IT LI NL SE**

(56) References cited:
**DE-A- 2 843 152**
**FR-A- 1 371 834**
**US-A- 2 942 618**
**US-A- 3 191 277**

(73) Proprietor: **Chuang, Rong-Chao, No. 113, Nan-Yang Road, Nan-Tsu Kaosiung(TW)**

(72) Inventor: **Chuang, Rong-Chao, No. 113, Nan-Yang Road, Nan-Tsu Kaosiung(TW)**

(74) Representative: **Arthur, Bryan Edward et al, Withers & Rogers 4 Dyer's Buildings Holborn, London EC1N 2JT(GB)**

ACTORUM AG

**Description**

This invention relates to an automatic overflow control apparatus or safety valve suitable for a pipeline which operates to shut off the flow of fluid in the pipeline when it reaches an excessive rate. It is suitable for use in connections between a main supply line and a subsidiary user system, particularly between a gas supply main and a domestic gas system.

Recently, the use of natural gas in private homes has become widespread. Ideally, the most convenient method to convey the natural gas to the private home is by direct connection to the natural gas main pipeline. However, a serious potential for danger exists in such arrangement. When the source of gas is bottled propane gas, the amount of gas contained in the gas cylinder is limited, so even if the gas supply line develops a leak due to breakage, corrosion or other reasons, it is relatively easy to handle and control. However, when the connection is to a natural gas pipeline, the natural gas is supplied continuously making the potential loss from leakage unlimited. Obviously, this creates a danger that is much more serious than that encountered when using bottled propane gas. Furthermore, since domestic gas supply systems operate at low pressure, then if the reducing pressure station became out of order, the unreduced high pressure natural gas flow would rupture the low pressure pipe resulting in a serious problem.

The object of this invention is to provide an automatic overflow control apparatus which will automatically shut off a pipeline in the event of an unusually high rate of fluid flow developing in it, e.g. in the event of a leak in the supply conduit due to breakage, corrosion or other occurrence.

FR-A 1 371 834 discloses an automatic shut off valve comprising a housing having an inlet and outlet, a chamber in the housing, and a ball in the chamber, the diameter of the ball in relation to that of the flow channel being such that normal fluid flow can pass around the ball but abnormal flow urges and seats the ball against the outlet port to shut off flow. The inner face of the outlet port is provided with a flexible annular ring against which the ball can seat. Ball release means are provided to dislodge the ball when abnormal flow has ceased.

The present invention is characterised by an orifice plate in the inlet port, the orifice of said plate being of smaller diameter than the ball and positioned so as to direct fluid flow towards the ball when it is in the unseated condition. In a preferred embodiment the orifice is offset from the centre line of the inlet port.

In a preferred embodiment the ball is of stainless steel and the outlet port is constituted by a flexible hollow cylinder, one end of which is positioned in said housing and the other end of which protrudes into said channel, the wall of said other end tapering outwardly to a ring of substantially constant wall thickness against which the ball seats in use.

A preferred embodiment of the invention particularly suitable for use in gas supply systems is now described, by way of example, with reference to the accompanying drawings in which:

Figure 1 is a side view, in cross-section of an embodiment of this invention, showing an apparatus as operating with normal gas flow;

Figure 2 is a side view, in cross-section, showing the apparatus of Figure 1 operating to shut off the gas flow; and

Figure 3 is an enlarged side view, in cross-section, of a valve seating for the shut-off ball, shown in Figures 1 and 2.

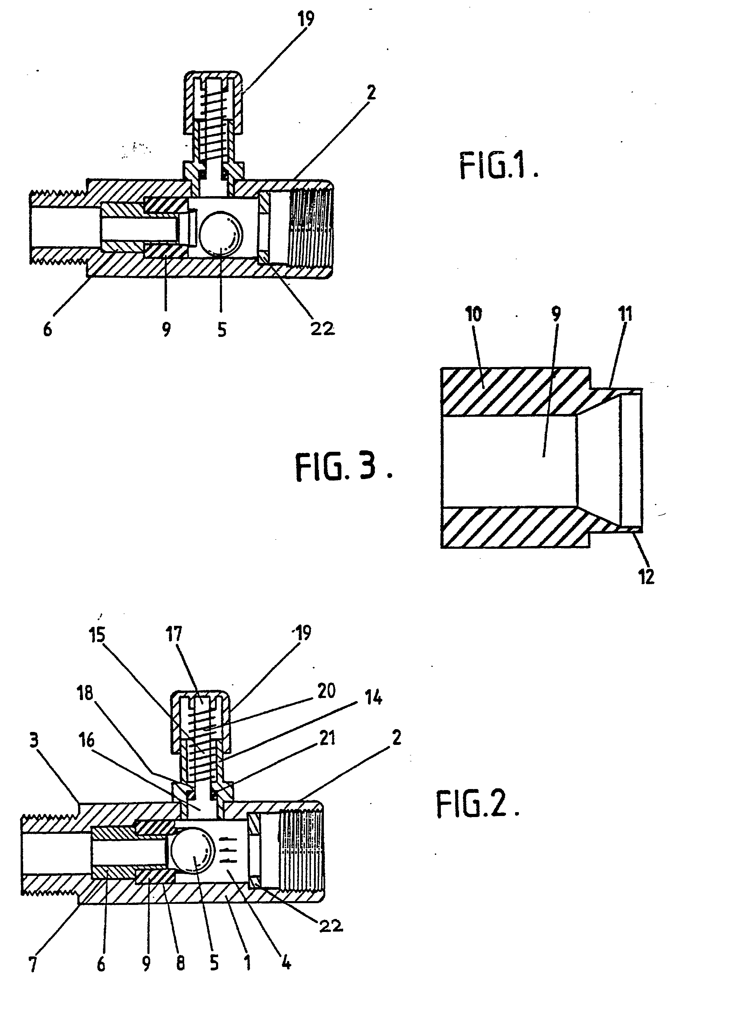

In Figure 1 and 2 there is illustrated an apparatus for automatically shutting off the flow channel therein when unusually high gas flows occur. This apparatus may be inserted between a main gas supply line and a domestic system.

The apparatus comprises a housing 1 having an inlet port 2, an outlet port 3 and a flow channel 4 therebetween. This housing is shown as a separate component suitable for connecting between a natural gas main pipeline and a domestic gas supply system. Alternatively, it may be formed integrally with said main natural gas pipeline. In either case, as a further alternative, the outlet port 3, instead of being connectable to a domestic gas supply system, may be provided with a tap and a nipple for receiving a rubber gas tube or connector.

Located within the housing 1 is a ball 5 which is of a diameter smaller than the internal diameter of the flow channel 4, the gap between the ball and the inner wall of the flow channel being sufficient to permit normal flows of gas past the ball without undue drop of pressure. The ball is preferably of stainless steel. Near the outlet port 3 is a hollow cylindrical bushing 6, the axis of which is aligned with that of the flow channel. Its rearward end (i.e. the end nearest the outlet port 3 of the housing) is a frictional tight fit within a rebate 7 in the flow channel. Its forward end is rebated to provide an annular gap between that end of the bushing and the inner wall of the flow passage at which position there is a further rebate 8 in the inner wall. In the space between rebates 7 and 8 is located in gas tight manner, one end of a valve seating 9.

As shown in more detail in Figure 3, the valve seating 9 is of a hollow cylindrical shape. One end 10 is of internal and external diameters suitable for fitting onto the bushing to provide the gas tight seal between the bushing and the flow channel. The other end 11 is tapered outwardly at its inner surface and rebated in its outer surface to provide a thin annular lip 12. The annular lip 12 is of smaller diameter than that of the ball 5. The valve seating (9) may be of natural or synthetic rubber or of resilient plastics material. Inserted in the inlet port 2 of the housing 1 is an orifice plate 22; the orifice is smaller than the diameter of the ball and is offset from the inlet centre line as shown.

The ball is freely disposed in the flow channel and can roll between the inlet and outlet ports. When the apparatus is fitted horizontally then at normal gas flows the ball 5 sits on the bottom of the flow channel between the ports and the gas flows past it.

However, if the gas flow increases to an abnormal degree, the high flow of gas urges the ball towards the outlet of the housing and into the thin annular lip 12 in which it becomes seated. The lip, being flexible, conforms to the ball and with it forms a gas-tight seal. This halts the flow of gas through the flow channel but the ball is held in place in the annular lip by the grip of the lip and the gas supply pressure in the flow channel.

In order that a normal gas flow can be resumed when the leak, or whatever caused the abnormally high gas flow, has been rectified, the housing is provided with ball release means. This release means comprises a T-piece in the side of the housing comprising a short tubular section 14 mounted in gas-tight manner in an aperture in the wall of the housing. Within the tubular section is a piston 15 having a head 16 and a stem 17 which is a sliding fit in an internal collar 18 in the tubular section. At the end of the stem is a cap 19 and between the cap and the head of the piston is a helical spring 20 under compression. Around the stem adjacent the head of the piston is a rubber ring seal 21. The spring 20 normally urges the head 16 toward the collar 18 and the ring 21 therebetween provides a gas-tight seal.

When the ball 5 is positioned in the annular lip 12 to close the flow channel it may be dislodged from the lip by depressing the cap 19 whereupon the head of the transversely arranged piston contacts the ball and knocks it down to its normal free position in the flow channel.

The orifice in the plate is of smaller diameter than that of the ball 5, and is aligned with the ball 5 when it is freely positioned on the lower part of the flow channel. Thus, the gas flow into the flow channel is directed at the ball and when the flow becomes abnormally high the ball is urged onto the annular lip 12 to shut off the flow.

Although the apparatus has been described with reference to use for controlling gas flows the invention can be applied to control of liquid flows in similar manner.

## Claims

1. An automatic overflow control apparatus comprising a housing (1) having an inlet port (2), an outlet port (3), a flow channel (4) between the ports, a ball (5) freely disposed in the channel, the diameter of the ball in relation to that of the flow channel (4) being such that normal fluid flow can pass through the channel (4) around the ball (5), but abnormal flow will urge and seat the ball (5) against the outlet port (3) to shut off flow, the inner face of the outlet port (3) being provided with a flexible annular ring (12) against which the ball (5) can seat and ball release means (14) extending into the channel (4) through a fluid tight seal and operable to dislodge the ball (5) when seated on the annular ring (12) of the outlet port (3), characterised in that the inlet port is provided with an orifice plate (22) which permits flow of fluid into said channel, the orifice being of smaller diameter than said ball and positioned so as to direct fluid flow toward said ball when in its freely disposed condition.

2. Apparatus according to claim 1 characterised in that the ball (5) is of stainless steel and the outlet port. is constituted by a flexible hollow cylinder (9), one end of which is positioned in said housing (1) and the other end of which protrudes into said channel (4), the wall of said other end tapering outwardly to the flexible annular ring (12) of substantially constant wall thickness against which the ball seats in use.

3. Apparatus according to claim 2 characterised in that the outer diameter of said cylinder (9) is substantially constant.

## Patentansprüche

1. Automatischer Überströmungs-Kontrollapparat mit einem Gehäuse (1), das einen Einlaß (2), einen Auslaß (3), einen sich zwischen Einlaß und Auslaß erstreckenden Strömungskanal (4) und eine Kugel (5) aufweist, die in dem Kanal frei angeordnet ist und deren Durchmesser im Verhältnis zu demjenigen des Strömungskanals (4) so gewählt ist, daß eine normale Fluidströmung durch den Kanal (4) die Kugel (5) umströmen kann, daß jedoch eine abnormale Strömung die Kugel (5) gegen den Auslaß (3) drängt und an diesem zur Anlage bringt, um die Strömung zu unterbinden, wobei die Innenseite des Auslasses (3) mit einem flexiblen, kreisrunden Ring (12) versehen ist, an dem die Kugel (5) zur Anlage kommen kann, und Kugel-Lösemittel (14) vorgesehen sind, die sich durch eine fluiddichte Dichtung hindurch in den Kanal (4) erstrecken und betätigbar sind, um die Kugel (5) zu verlagern, wenn sie an dem kreisrunden Ring (12) des Auslasses (3) in Anlage ist, dadurch gekennzeichnet, daß der Einlaß mit einer Öffnungsplatte (22) versehen ist, die einen Zustrom von Fluid in den Kanal ermöglicht und deren Öffnung einen kleineren Durchmesser besitzt als die Kugel und so angeordnet ist, daß sie den Fluidstrom gegen die Kugel richtet, wenn sich diese im Zustand der freien Lageanordnung befindet.

2. Apparat nach Anspruch 1, dadurch gekennzeichnet, daß die Kugel (5) aus rostfreiem Stahl gefertigt und der Auslaß durch einen flexiblen Hohlzylinder (9) gebildet ist, dessen eines Ende in dem genannten Gehäuse (1) in Stellung gehalten ist und dessen anderes Ende in den genannten Kanal (4) hineinragt, wobei die Wandung dieses anderen Endes sich nach auswärts zu dem flexiblen kreisrunden Ring (12) hin verjüngt, der eine im wesentlichen konstante Wandstärke besitzt und an dem die Kugel im Betrieb zur Anlage kommt.

3. Apparat nach Anspruch 2, dadurch gekennzeichnet, daß der Außendurchmesser des genannten Zylinders (9) im wesentlichen konstant ist.

## Revendications

1. Appareil de contrôle automatique d'un débit excessif comportant un boîtier (1) présentant un orifice d'entrée (2), un orifice de sortie (3), un canal d'écoulement (4) entre les orifices, une bille (5) disposée librement dans le canal, le diamètre de la bille étant fonction de celui du canal d'écoulement (4) et tel qu'un écoulement normal du fluide peut traverser le canal (4) en s'écoulant autour de la bille (5), mais qu'un écoulement anormal poussera la bille (5) et la logera contre l'orifice de sortie (3) afin d'arrêter l'écoulement, la face intérieure de l'orifice de sortie (3) étant pourvue d'une bague annulaire flexible (12) contre laquelle la bille (5) peut se loger et des moyens de libération de la bille (14) s'étendant dans le canal (4) à travers un joint étanche au fluide et pouvant être actionnés pour déloger la bille (5) lorsque celle-ci est logée contre la bague annulaire (12) de l'orifice de sortie (3), caractérisé en ce que l'orifice d'entrée est pourvu d'un disque avec une ouverture (22) permettant l'écoulement de fluide dans ledit canal, l'ouverture ayant un diamètre inférieur à ladite bille et étant positionnée de manière à diriger l'écoulement de fluide en direction de ladite bille lorsqu'elle est en condition libre.

2. Appareil selon la revendication 1, caractérisé en ce que la bille (5) est en acier inoxydable et en ce que l'orifice de sortie est constitué par un cylindre creux flexible (9) dont une extrémité est positionnée à l'intérieur dudit boîtier (1) et dont l'autre extrémité dépasse dans ledit canal (4), la paroi de ladite autre extrémité se rétrécissant vers l'extérieur en direction de la bague annulaire flexible (12) dont la paroi a une épaisseur sensiblement constante et contre laquelle, en fonctionnement, la bille vient se loger.

3. Appareil selon la revendication 2, caractérisé en ce que le diamètre extérieur dudit cylindre (9) est sensiblement constant.

FIG.1.

FIG. 3 .

FIG.2 .